# EUROPEAN PATENT SPECIFICATION

(11) **EP 2 125 399 B1**
(45) Date of publication and mention of the grant of the patent: **17.04.2013**
(21) Application number: 08720736.1
(22) Date of filing: 07.02.2008
(51) Int. Cl.: B60G 21/055

(54) **STABILIZER SUPPORT STRUCTURE**
STÜTZSTRUKTUR FÜR STABILISATOR
STRUCTURE DE SUPPORT POUR STABILISATEUR

(30) Priority: 27.02.2007 JP 2007047175; 27.02.2007 JP 2007047176; 12.07.2007 JP 2007182844
(43) Date of publication of application: 02.12.2009
(60) Divisional application: 11195280.0
(73) Proprietor: Honda Motor Co., Ltd., Minato-ku Tokyo 107-8556 (JP)
(72) Inventor: MIYAMOTO, Yasuo, Wako-shi Saitama 351-0193 (JP)
(74) Representative: Herzog, Markus
(86) International application number: PCT/JP2008/052477
(87) International publication number: WO 2008/120501

(56) References cited:
- EP-A- 0 893 291
- EP-A- 0 900 677
- EP-A- 0 911 195
- EP-A- 1 124 076
- EP-A- 1 832 449
- DE-A1- 3 327 817
- DE-C1- 4 309 425
- DE-C1- 19 709 669
- DE-U1- 9 002 537
- JP-U- 4 011 710
- US-A1- 2006 091 595
- US-A1- 2006 125 165
- US-B1- 6 513 801

## Description

### TECHNICAL FIELD

The present invention relates to a stabilizer support structure in which an inner peripheral face of a tubular stabilizer bush is fitted onto an outer peripheral face of a torsion portion of a stabilizer providing a connection between left and right suspension systems, and an outer peripheral face of the stabilizer bush is clamped under pressure and fixed between a mounting portion of a vehicle body and a fixing member fixed to the vehicle body.

### BACKGROUND ART

An arrangement is known from Patent Publication 1 below in which an axial hole of a rubber stabilizer bush is fitted onto the outer periphery of a torsion portion of a stabilizer providing a connection between left and right suspension systems, and the stabilizer bush is supported on a vehicle body frame via a mounting bracket, wherein forming a rib (lip) at an open end of the axial hole of the stabilizer bush prevents sand or mud from entering between sliding faces of the stabilizer bush and the stabilizer.

Patent Publication 1: Japanese Utility Model Registration Application Laid-open No. 4-11710

US-A-2006/01 25165, EP-A-911195, EP-A-893291 and DE-C-19709669 disclose a stabilizer support in which an inner peripheral face of a tubular stabilizer bush is fitted onto an outer peripheral face of a torsion portion of a stabilizer providing a connection between left and right suspension systems, and an outer peripheral face of the stabilizer bush is clamped under pressure and fixed between a mounting portion of a vehicle body and a fixing member fixed to the vehicle body, wherein a chamfered portion opening out radially outwardly formed on at least one open end of the inner peripheral face of the stabilizer bush over the total circumference thereof. EP-A-900677 discloses a stabilizer support in which tubular stabilizer bush is fitted onto an outer peripheral face of a torsion portion of a stabilizer providing a connection between left and right suspension systems comprises a slit cut from an outer peripheral face to an inner peripheral face thereof along an axis, and the stabilizer bush is clamped along under pressure and fixed between a mounting body and a fixing member fixed to the vehicle body, wherein a thick portion extending radially along opposite sides of the slit is provided on a side face of the stabilizer bush in the axis direction.

### DISCLOSURE OF INVENTION

### PROBLEMS TO BE SOLVED BY THE INVENTION

In the above conventional arrangement, since the open end of the axial hole of the stabilizer bush is equipped with a thin lip, when the lip of the stabilizer bush slides against the outer peripheral face of the torsion portion of the stabilizer over a long period of time, the lip might be abraded or broken, and it might become impossible to prevent sand or mud from entering.

In particular, when, in order to fit the stabilizer bush onto the outer peripheral face of the torsion portion of the stabilizer, the stabilizer bush is equipped with a slit that is cut from the outer peripheral face to the inner peripheral face along the axis, if a load in the radial direction is imposed on the torsion portion, the slit opens, and sand or mud that has entered through the opened slit might reach the outer peripheral face of the torsion portion.

The present invention has been accomplished in the light of the above-mentioned circumstances, and it is an object thereof to prevent, by a simple and highly durable structure, sand or mud from entering between an outer peripheral face of a stabilizer and an inner peripheral face of a stabilizer bush.

### MEANS FOR SOLVING THE PROBLEMS

In order to attain the above object the invention provides a stabiliser support structure in accordance with claim 1. According to a first aspect of the present invention, there is provided a stabilizer support structure in which an inner peripheral face of a tubular stabilizer bush is fitted onto an outer peripheral face of a torsion portion of a stabilizer providing a connection between left and right suspension systems, and an outer peripheral face of the stabilizer bush is clamped under pressure and fixed between a mounting portion of a vehicle body and a fixing member fixed to the vehicle body, wherein a chamfered portion opening out radially outwardly is formed on at least one open end of the inner peripheral face of the stabilizer bush.

According to a second aspect of the present invention, in addition to the first aspect, an acute angle formed by an axis of the stabilizer bush and the chamfered portion is 45° to 75°.

According to a third aspect of the present invention, in addition to the first aspect, the stabilizer bush comprises a slit cut from the outer peripheral face to the inner peripheral face along the axis, and the width of the slit decreases in a wedge shape from the outer peripheral face side to the inner peripheral face side.

According to a fourth aspect of the present invention, in addition to the third aspect, the slit is formed by die-molding for the outer peripheral face side and by cutting by means of a cutter or a laser for the inner peripheral face side.

According to a fifth aspect of the present invention, in addition to the first aspect, a small-diameter portion projecting radially inwardly is provided on an edge portion of the chamfered portion on the inner peripheral face side.

According to a sixth aspect of the present invention, in addition to the first aspect, the stabilizer comprises arm portions extending linearly in the longitudinal direction of the vehicle body from opposite ends of the torsion portion extending linearly in the vehicle width direction, wherein the arm portion is formed from a member separate from the torsion portion, and end parts on the front side in the longitudinal direction of the vehicle body are mounted on opposite ends of the torsion portion.

According to a seventh aspect of the present invention, in addition to the first aspect, in a cross section of the stabilizer bush perpendicular to an axis thereof, the chamfered portion is formed in a linear shape.

According to an eighth aspect of the present invention, in addition to the first aspect, in a cross section of the stabilizer bush perpendicular to an axis thereof, the chamfered portion is formed in a curved shape.

According to a ninth aspect of the present invention, in addition to the first aspect, in a cross section of the stabilizer bush containing to an axis thereof, the chamfered portion is formed in a stepped linear shape.

According to a tenth aspect of the present invention, in addition to the third aspect, a thick portion extending radially along opposite sides of the slit is provided on a side face, in the axis direction, of the stabilizer bush.

According to the present invention, there is provided a stabilizer support structure in which an inner peripheral face of a tubular stabilizer bush is fitted onto an outer peripheral face of a torsion portion of a stabilizer providing a connection between left and right suspension systems, and an outer peripheral face of the stabilizer bush is clamped under pressure and fixed between a mounting portion of a vehicle body and a fixing member fixed to the vehicle body, wherein the stabilizer bush comprises a slit cut from the outer peripheral face to the inner peripheral face along an axis, and a chamfered portion opening out radially outwardly is formed on at least one open end of the inner peripheral face of the stabilizer bush at least in positions sandwiching the slit.

In the invention, the chamfered portion is provided only at positions sandwiching the slit.

First and second outer peripheral faces 18a and 18b of an embodiment correspond to the outer peripheral face of the present invention, and a mounting bracket 21 of the embodiment corresponds to the fixing member of the present invention.

### EFFECTS OF THE INVENTION

In accordance with the first aspect of the present invention, the stabilizer bush is fitted onto the outer peripheral face of the torsion portion of the stabilizer and fixed by being clamped under pressure between the mounting portion of the vehicle body and the fixing member. Since a chamfered portion that opens out radially outwardly is formed at the open end of the inner peripheral face of the stabilizer bush, when the stabilizer bush is compressed radially inwardly by being clamped under pressure between the mounting portion of the vehicle body and the fixing member, an axially inward load is generated at the open end of the inner peripheral face, thus preventing the open end from opening in a way such that it turns up. It is thereby possible to prevent sand or mud from entering between the inner peripheral face of the stabilizer bush and the torsion portion of the stabilizer, thus preventing the occurrence of abnormal noise or abrasion of the stabilizer. Moreover, since the stabilizer bush does not have a thin lip, its durability is improved.

Furthermore, in accordance with the second aspect of the present invention, since the acute angle formed by the axis of the stabilizer bush and the chamfered portion is set at 45° to 75°, when a foreign body is pressed against the chamfered portion of the stabilizer bush, the open end of the inner peripheral face is difficult to open, and a foreign body held by the chamfered portion is prevented from biting thereinto and can be easily ejected.

Moreover, in accordance with the third aspect of the present invention, since the width of the slit that is cut along the axis of the stabilizer bush decreases in a wedge shape from the outer peripheral face side to the inner peripheral face side, when the slit is closed by clamping under pressure and fixing the stabilizer bush between the mounting portion of the vehicle body and the fixing member, a strong contact surface pressure is generated in an extremity portion of the slit communicating with the inner peripheral face, thus preventing a gap from being formed and preventing a foreign body from entering through the slit.

Furthermore, in accordance with the fourth aspect of the present invention, since the outer peripheral face side of the slit of the stabilizer bush is formed by molding with a die and the inner peripheral face side is formed by cutting with a cutter or a laser, it is possible to prevent flashing from being formed in the portion via which the slit communicates with the inner peripheral face, thereby enabling the slit to be completely closed up.

Moreover, in accordance with the fifth aspect of the present invention, since the small-diameter portion is provided so as to project radially inwardly on the edge portion of the inner peripheral face side of the chamfered portion of the stabilizer bush, the surface pressure of the inner peripheral face of the stabilizer bush abutting against the outer peripheral face of the torsion portion increases in the small-diameter portion, thus more reliably preventing the entrance of sand or mud.

Furthermore, in accordance with the sixth aspect of the present invention, since the stabilizer includes the arm portions linearly extending in the longitudinal direction of the vehicle body from opposite ends of the torsion portion linearly extending in the vehicle width direction, the arm portions are formed from members separate from the torsion portion, and end parts on the front side in the longitudinal direction of the vehicle body are mounted on opposite ends of the torsion portion, compared with a case in which the stabilizer is formed from one member, the degrees of freedom in design can be increased.

Moreover, in accordance with the seventh aspect of the present invention, since the chamfered portion is formed in a linear shape in the cross section perpendicular to the axis of the stabilizer bush, it is possible to prevent sand or mud from entering between the inner peripheral face of the stabilizer bush and the torsion portion of the stabilizer, thus preventing the occurrence of abnormal noise or abrasion of the stabilizer.

Furthermore, in accordance with the eighth aspect of the present invention, since the chamfered portion is formed in a curved shape in the cross section perpendicular to the axis of the stabilizer bush, it is possible to prevent sand or mud from entering between the inner peripheral face of the stabilizer bush and the torsion portion of the stabilizer, thus preventing the occurrence of abnormal noise or abrasion of the stabilizer.

Moreover, in accordance with the ninth aspect of the present invention, since the chamfered portion is formed in a stepped linear shape in the cross section containing the axis of the stabilizer bush, it is possible to prevent sand or mud from entering between the inner peripheral face of the stabilizer bush and the torsion portion of the stabilizer, thus preventing the occurrence of abnormal noise or abrasion of the stabilizer.

Furthermore, in accordance with the tenth aspect of the present invention, since the rigidity of the thick portion is higher than that of other portions, the thick portion being provided so as to extend in the radial direction along opposite sides of the slit on the side face, in the axis direction, of the stabilizer bush, it is possible to strongly press the slit into contact in a closing direction. It is thereby possible to prevent the slit from opening and sand or mud from entering between the inner peripheral face of the stabilizer bush and the torsion portion of the stabilizer, thus preventing the occurrence of abnormal noise or abrasion of the stabilizer.

Moreover, in accordance with the present invention as claimed in claim 1, the stabilizer bush is fitted onto the outer peripheral face of the torsion portion of the stabilizer and fixed by being clamped under pressure between the mounting portion of the vehicle body and the fixing member. Since the stabilizer bush includes the slit that is cut along its axis, and the chamfered portion opening out radially outwardly is formed at positions, sandwiching the slit, at the open end of the inner peripheral face of the stabilizer bush, when the stabilizer bush is compressed radially inwardly by being clamped under pressure between the mounting portion of the vehicle body and the fixing member, an axially inward load is generated at the positions, sandwiching the slit, at the open end of the inner peripheral face of the stabilizer bush, thus preventing the open end from opening in a way such that it turns up. It is thereby possible to prevent sand or mud from entering between the inner peripheral face of the stabilizer bush and the torsion portion of the stabilizer, thus preventing the occurrence of abnormal noise or abrasion of the stabilizer. Moreover, since the stabilizer bush does not have a thin lip, the durability improves.

### BRIEF DESCRIPTION OF DRAWINGS

[FIG. 1] A perspective view showing a state in which a stabilizer is mounted on a vehicle
[FIG. 2] An enlarged sectional view along line 2-2 in FIG. 1
[FIG. 3] A sectional view along line 3-3 in FIG. 2
[FIG. 4A] A diagram for explaining the operation of a chamfered portion of a stabilizer bush
[FIG. 4B] A diagram for explaining the operation of a chamfered portion of a stabilizer bush
[FIG. 5] A vertical sectional view of a stabilizer bush
[FIG. 6] A side view of a stabilizer bush
[FIG. 7A] A diagram for explaining a process for producing a stabilizer bush [FIG. 7B] A diagram for explaining the process for producing a stabilizer bush
[FIG. 8A] A diagram showing a stabilizer bush according to the invention
[FIG. 8B] A sectional view along line B-B in FIG. 8A
[FIG. 9A] A diagram showing a stabilizer bush according to the invention
[FIG. 9B] A sectional view along line B-B in FIG. 9A
[FIG. 10A] A diagram for explaining the operation when machining a slit
[FIG. 10B] A diagram for explaining the operation when machining a slit
[FIG. 11A] A vertical sectional view of a stabilizer bush
[FIG. 11 B] A vertical sectional view of a stabilizer bush
[FIG. 12] A perspective view showing a state in which a stabilizer is mounted on a vehicle
[FIG. 13] An enlarged view from arrowed line 13-13 in FIG. 12
[FIG. 14] A sectional view along line 14-14 in FIG. 13
[FIG. 15] A sectional view, corresponding to FIG. 14, of a stabilizer bush in a free state
[FIG. 16] A view from the direction of arrow 16 in FIG. 13
[FIG. 17] A side view of a stabilizer bush in a free state

### EXPLANATION OF REFERENCE NUMERALS AND SYMBOLS

14 Stabilizer
15 Torsion portion
18 Stabilizer bush
18a First outer peripheral face (outer peripheral face)
18b Second outer peripheral face (outer peripheral face)
18d Inner peripheral face
18e Slit
18f Chamfered portion
18g Small-diameter portion
18h Thick portion
19 Vehicle body
19a Mounting portion
21 Mounting bracket (fixing member)
35 Cutter
L Axis
S Suspension system

### BEST MODE FOR CARRYING OUT THE INVENTION

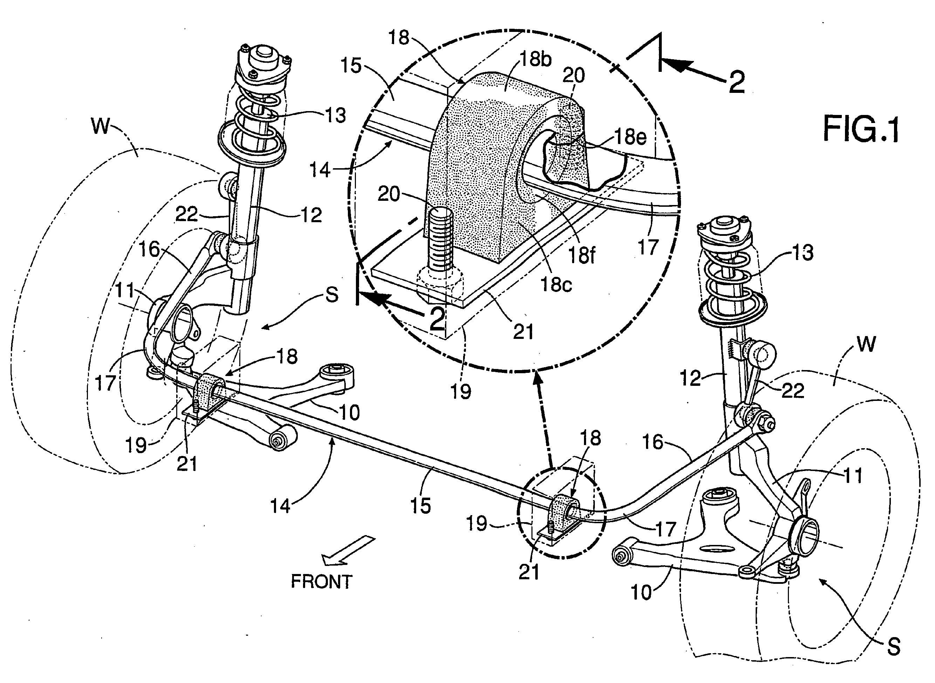

A first embodiment of the present invention is now explained by reference to FIG. 1 to FIG. 4B.

As shown in FIG. 1, strut type suspension systems S and S suspending left and right wheels W and W include left and right knuckles 11 and 11 vertically movably supported on a vehicle body via suspension arms 10 and 10, dampers 12 and 12 connected to upper parts of the knuckles 11 and 11 and extending upward, suspension springs 13 and 13 disposed coaxially on the outer periphery of upper parts of the dampers 12 and 12, and a stabilizer 14 providing a connection between the upper parts of the left and right knuckles 11 and 11.

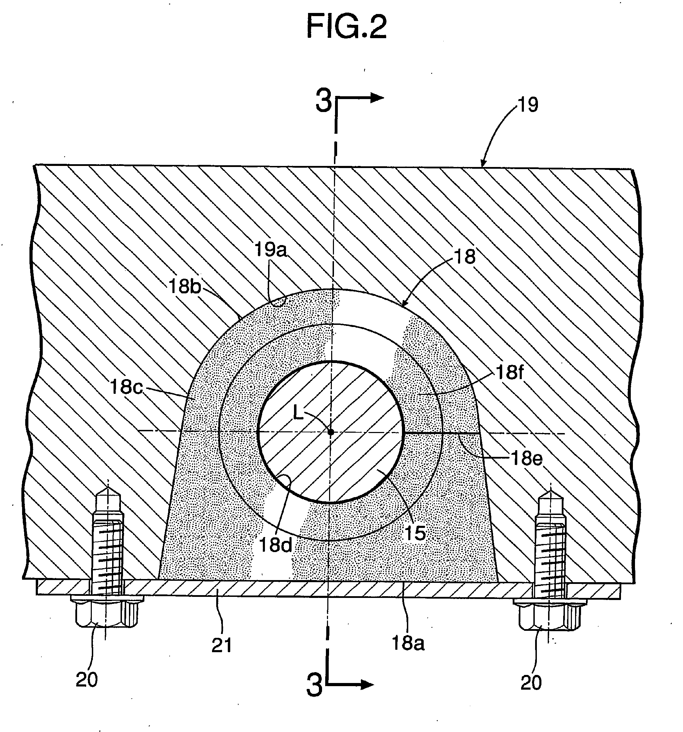

The stabilizer 14 includes a torsion portion 15 extending linearly in the vehicle width direction, left and right arm portions 16 and 16 extending linearly from opposite ends of the torsion portion 15 toward the rear of the vehicle body, and left and right curved portions 17 and 17 providing smooth connections between the torsion portion 15 and the arm portions 16 and 16. Extremities of the left and right arm portions 16 and 16 are connected to the dampers 12 and 12 via links 22 and 22. Tubular stabilizer bushes 18 and 18 made of rubber are fitted onto opposite ends of the torsion portion 15 adjacent to the left and right curved portions 17 and 17, and these stabilizer bushes 18 and 18 are supported by being clamped between a U-shaped mounting portion 19a (see FIG. 2) of a vehicle body 19 and a plate-shaped mounting bracket 21 fixed by bolts 20 and 20 to the vehicle body 19 so as to cover the mounting portion 19a.

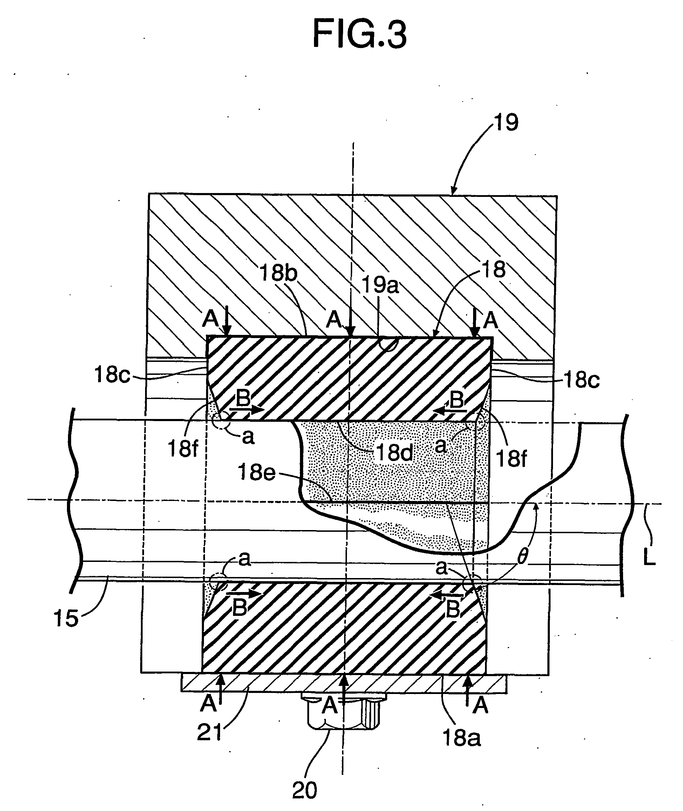

As is clear from FIG. 2 and FIG. 3, each stabilizer bush 18 includes a flat first outer peripheral face 18a, a U-shaped second outer peripheral face 18b, a pair of side faces 18c and 18c, and a circular cross-section inner peripheral face 18d opening on the two side faces 18c and 18c and into which the torsion portion 15 of the stabilizer 14 is fitted. A split groove-shaped slit 18e is formed in the stabilizer bush 18, the slit 18e being disposed within a plane containing an axis L of the stabilizer bush 18 and extending from the second outer peripheral face 18b to the inner peripheral face 18d. Furthermore, chamfered portions 18f and 18f opening out radially outwardly are formed at opposite ends, along the axis L direction, of the inner peripheral face 18d.

The stabilizer bush 18 having the above-mentioned shape may be fitted onto the outer peripheral face of the torsion portion 15 of the stabilizer 14 by resiliently deforming the slit 18e so as to widen it. The U-shaped second outer peripheral face 18b of the stabilizer bush 18 is fitted into the U-shaped mounting portion 19a of the vehicle body 19, and the flat first outer peripheral face 18a is retained by abutting it against the flat mounting bracket 21. In this arrangement, the stabilizer bush 18 is clamped between the vehicle body 19 and the mounting bracket 21 and compressed radially inwardly by a predetermined tightening allowance, the inner peripheral face 18d is pressed against the outer peripheral face of the torsion portion 15 of the stabilizer 14, and the slit 18e is pressed so as to close it.

With regard to the stabilizer 14 having the above arrangement, when the left and right wheels W and W move vertically with the same phase, since the left and right arm portions 16 and 16 move vertically with the same phase, the torsion portion 15 is not twisted, and a roll moment is not generated, but when the left and right wheels W and W move vertically with opposite phases, since the left and right arm portions 16 and 16 move vertically with opposite phases, the torsion portion 15 is twisted, and a roll moment for suppressing rolling of the vehicle body is thus generated, thereby enhancing the drivability of the vehicle.

When an external force acts on the stabilizer 14 in the radial direction, a gap is formed between the outer peripheral face of the torsion portion 15 and the inner peripheral face 18d of the stabilizer bush 18, and there is a possibility of sand or mud entering therethrough, thus causing abnormal noise or abrasion. In this embodiment, the chamfered portions 18f and 18f formed at opposite ends, in the axis L direction, of the inner peripheral face 18d of the stabilizer bush 18 function so as to prevent sand or mud from entering.

That is, when the stabilizer bush 18 is clamped between the vehicle body 19 and the mounting bracket 21 and compressed radially inwardly by a predetermined tightening allowance, the stabilizer bush 18 resiliently deforms so as to be pushed outward in the axis L direction, an end part in the axis L direction of the inner peripheral face 18d turns up, thus forming a gap across the outer peripheral face of the torsion portion 15, and there is a possibility of sand or mud entering through the gap.

However, since the chamfered portions 18f and 18f are provided at the ends, in the axis L direction, of the inner peripheral face 18d of the stabilizer bush 18, when a compressive load A is applied thereto in a direction perpendicular to the axis L in FIG. 3, a load B facing inward in the axis L direction is generated, thus increasing the surface pressure with which a part a of the open end of the inner peripheral face 18d contacts the torsion portion 15. As a result, even when a radial load is applied to the torsion portion 15, it is possible to prevent a gap from being formed between the outer peripheral face thereof and the inner peripheral face 18d of the stabilizer bush 18, thus preventing sand or mud from entering. Moreover, since the stabilizer bush 18 does not have a thin lip, the durability improves.

The function of preventing sand or mud from entering, exhibited by the chamfered portions 18f and 18f, is changed by the size of an acute angle θ formed by the axis L of the stabilizer bush 18 and the chamfered portions 18f and 18f. When sand S is pushed against the chamfered portion 18f in the axis L direction with a load F, the load F is resolved into a component F1 in a direction perpendicular to the chamfered portion 18f and a component F2 in a direction perpendicular to the axis L, and a reaction force F2' to the component F2 in the direction perpendicular to the axis L works so as to push open the chamfered portion 18f.

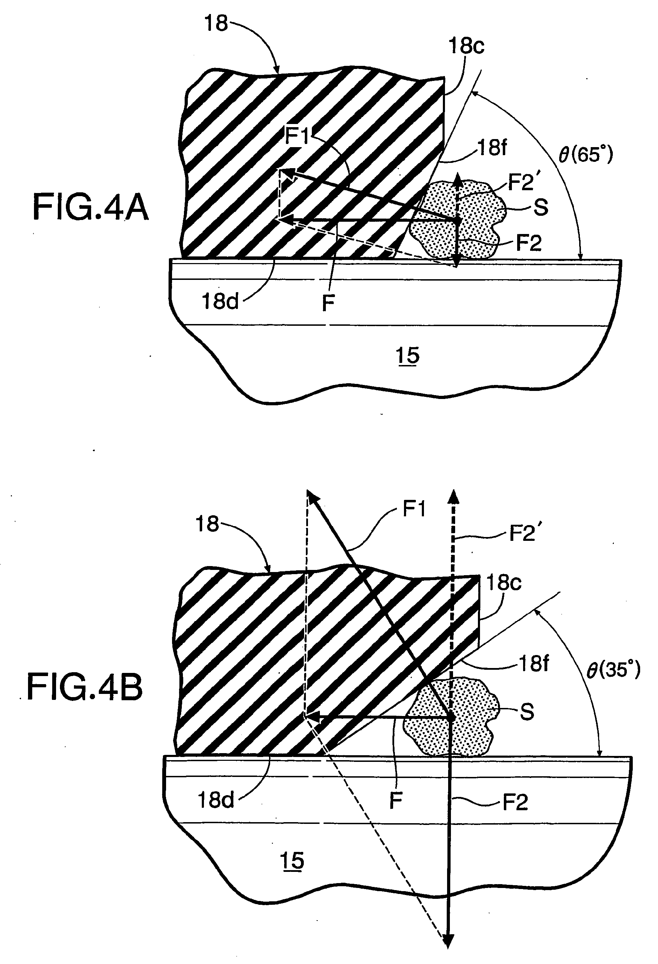

FIG. 4A and FIG. 4B show cases in which the acute angle θ is 65° and 35°. In the case of FIG. 4A in which the acute angle θ is large, the reaction force F2', which works so as to push open the chamfered portion 18f, is small, but in the case of FIG. 4B in which the acute angle θ is small, the reaction force F2', which works so as to push open the chamfered portion 18f, is large. When the acute angle θ is large, it is harder for a foreign body to bite into the chamfered portion 18f, and it is easier to eject a foreign body once it has bitten into the chamfered portion 18f instead of it remaining there. For these reasons it is desirable that a lower limit value of the acute angle θ is 45°.

On the other hand, as described above, when the acute angle θ is close to a right angle, since the chamfered portion 18f is pushed outward in the axis L direction and opens in a way such that it turns up due to the load that works to compress the stabilizer bush 18 radially inwardly, it is desirable that an upper limit of the acute angle θ is 75°. It is therefore possible, by setting the acute angle θ in the range of 45° to 75°, to prevent a foreign body from biting into the chamfered portion 18f or prevent it being difficult to eject a foreign body that has bitten in, while making it difficult to open the open end of the inner peripheral face 18d of the stabilizer bush 18.

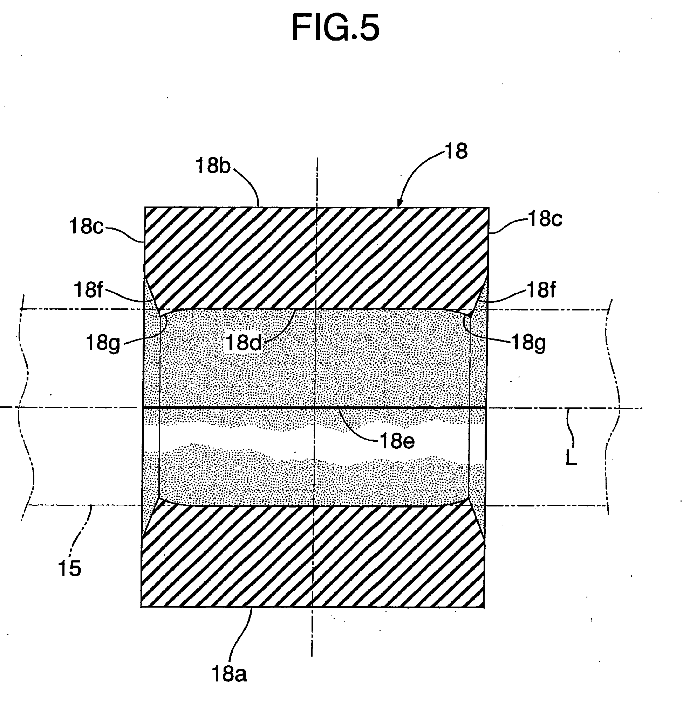

A second embodiment is now explained by reference to FIG. 5.

In the second embodiment, small-diameter portions 18g and 18g having a reduced inner diameter are formed at opposite ends, in the axis L direction, of the inner peripheral face 18d of the stabilizer bush 18 of the first embodiment, that is, they are portions connected to the chamfered portions 18f and 18f. Due to the small-diameter portions 18g and 18g being formed, the surface pressure with which the inner peripheral face 18d of the stabilizer bush 18 abuts against the outer peripheral face of the torsion portion 15 increases, thus more reliably preventing sand or mud from entering.

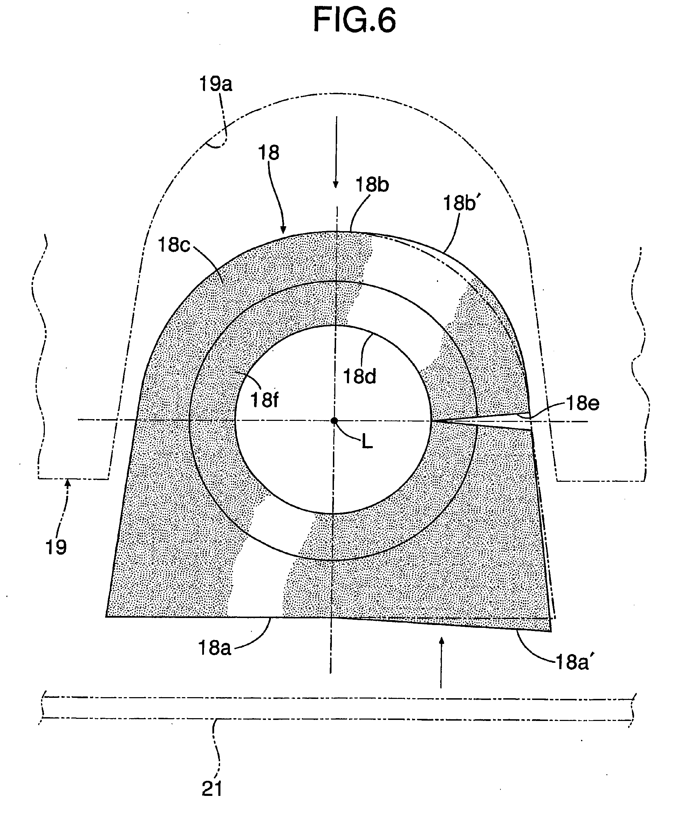

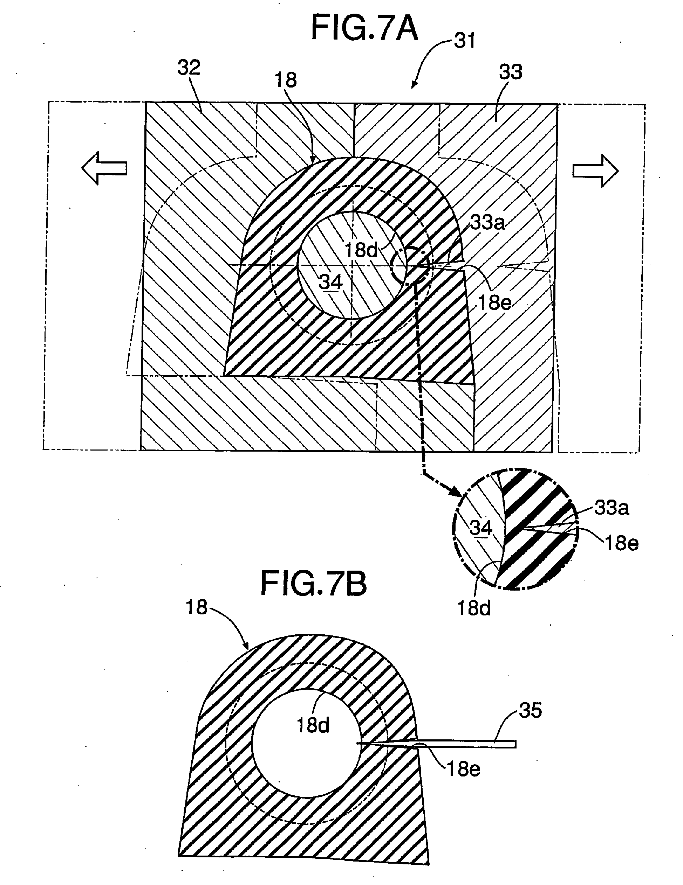

A third embodiment is now explained by reference to FIG. 6, FIG. 7A, and FIG. 7B.

The slit 18e of the stabilizer bush 18 of the first and second embodiments is formed by cutting with a cutter or a laser after molding the stabilizer bush 18, but in a stabilizer bush 18 of the third embodiment its slit 18e is formed by the combined use of die molding and cutting.

As shown in FIG. 6, in the stabilizer bush 18, a first bulge portion 18a' projects radially outward from a first outer peripheral face 18a on the slit 18e side, and a second bulge portion 18b' projects radially outward from a second outer peripheral face 18b on the slit 18e side. Therefore, when the stabilizer bush 18 is held between a mounting portion 19a of a vehicle body 19 and a mounting bracket 21, by compressing the first and second bulge portions 18a' and 18b' the slit 18e closes up tight, thus preventing sand or mud from entering therethrough.

As shown in FIG. 7A, a die 31 for molding the stabilizer bush 18 is formed from a first die 32, a second die 33, and a core 34, and a wedge-shaped projection 33a for molding the slit 18e is formed on the second die 33. The extremity of the wedge-shaped projection 33a does not reach the outer peripheral face of the core 34 and, therefore, when it is molded by means of the die 31, the extremity of the slit 18e of the stabilizer bush 18 does not communicate with an inner peripheral face 18d. After molding by means of the die 31 is completed, as shown in FIG. 7B, the extremity of the slit 18e is cut completely up to the inner peripheral face 18d by means of a cutter 35 (or a laser).

If the slit 18e were formed only by die molding so as to reach the inner peripheral face 18d, flashing would unavoidably be formed between the projection 33a of the second die 33 and the core 34; the flashing would not allow the slit 18e to close completely, and a gap might be formed, but by cutting the extremity of the slit 18e using the cutter 35, the intimacy of contact of this portion can be enhanced, thus preventing a foreign body from entering.

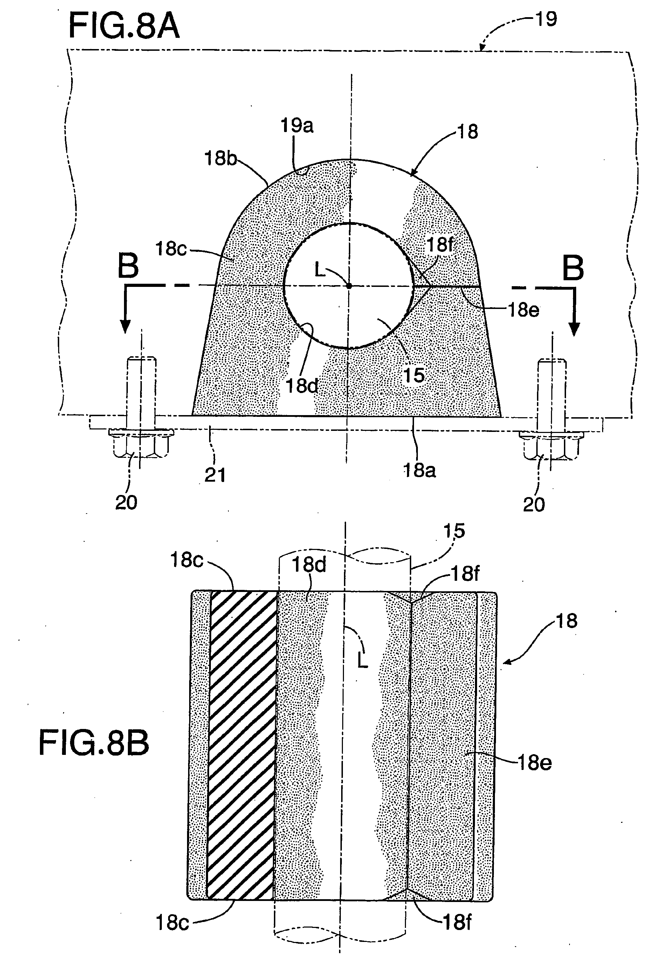

A fourth embodiment, an embodiment of the present invention, is now explained by reference to FIG. 8A and FIG. 8B.

In the first to third embodiments described above, the chamfered portions 18f and 18f, which open out radially outwardly, are formed over 360° at opposite ends, in the axis L direction, of the inner peripheral face 18d of the stabilizer bush 18, but in the fourth embodiment chamfered portions 18f and 18f are formed only in opposite side portions sandwiching a slit 18e. The shape of the chamfered portion 18f when viewed in the axis L direction is tapered in an isosceles triangle shape radially outwardly from an inner peripheral face 18d of a stabilizer bush 18, and the vertex thereof is positioned on the slit 18e. Therefore, the depth of the chamfered portion 18f is the deepest at a position where the slit 18e intersects the inner peripheral face 18d of the stabilizer bush 18, and gradually becomes shallower in going radially outward therefrom and also toward opposite sides in the circumferential direction.

The operation of the chamfered portion 18f of the fourth embodiment is the same as that of the annular chamfered portion 18f of the first embodiment, but by providing the chamfered portion 18f on opposite sides of the slit 18e, which is easily opened out by a radial load accompanying twisting deformation of the stabilizer 14 to thus allow sand or mud to enter, it is possible to attain the same operational effects as those of the chamfered portion 18f extending over 360° of the first to third embodiments, while reducing the dimensions of the chamfered portion 18f.

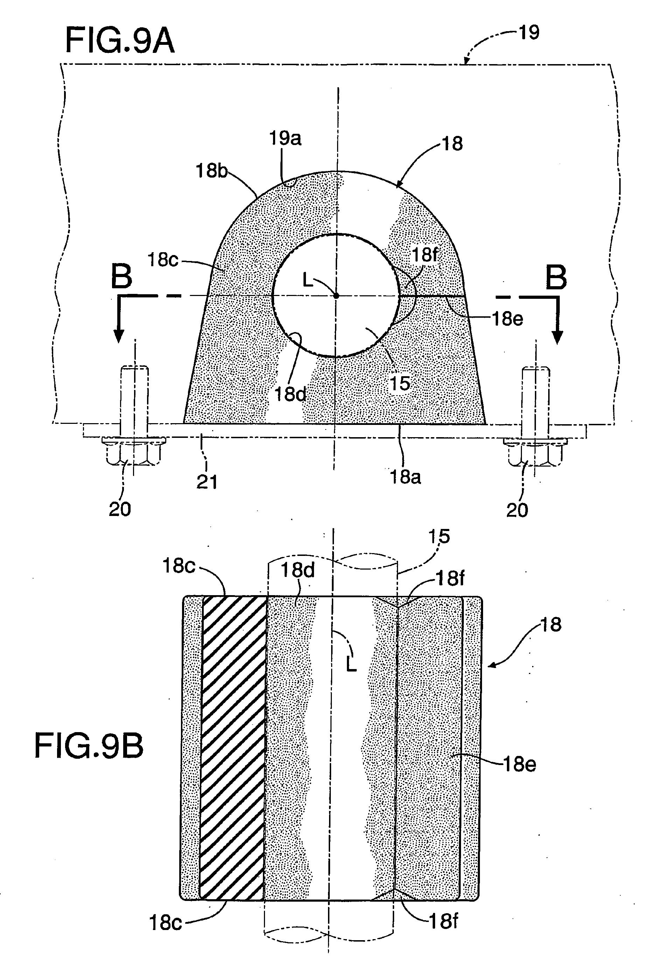

A fifth embodiment, also an embodiment of the present invention_{,} is now explained by reference to FIG. 9A and FIG. 9B.

The chamfered portion 18f of the fourth embodiment is formed in an isosceles triangle shape, but a chamfered portion 18f of the fifth embodiment is formed in a crescent shape, the arrangement otherwise being the same. The function of preventing sand or mud from entering via the slit 18e is the same for the fourth embodiment and the fifth embodiment, but the fifth embodiment has the effect of improving the workability during production.

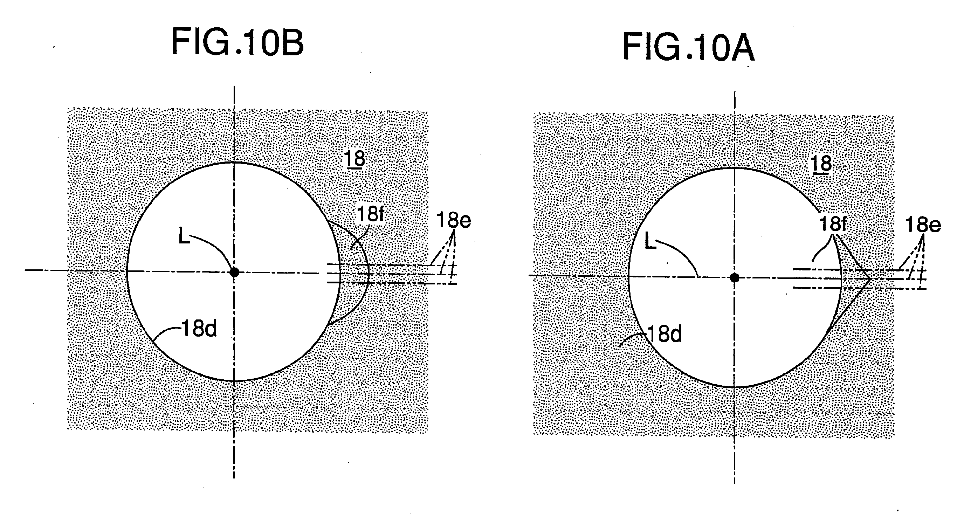

That is, as described above, after die-molding a stabilizer bush 18, the slit 18e is machined by means of a cutter 35 (or a laser). In this process, as shown in FIG. 10A, if as in the fourth embodiment an isosceles triangle-shaped chamfered portion 18f is provided, when the position of the slit 18e is off only slightly in the circumferential direction, it misses the vertex of the isosceles triangle-shaped chamfered portion 18f, and the function of the chamfered portion 18f might be impaired. On the other hand, as shown in FIG. 10B, when the crescent-shaped chamfered portion 18f of the fifth embodiment is provided, even if the position of the slit 18e is slightly off in the circumferential direction, it has hardly any effect, and the function of the chamfered portion 18f can be exhibited stably.

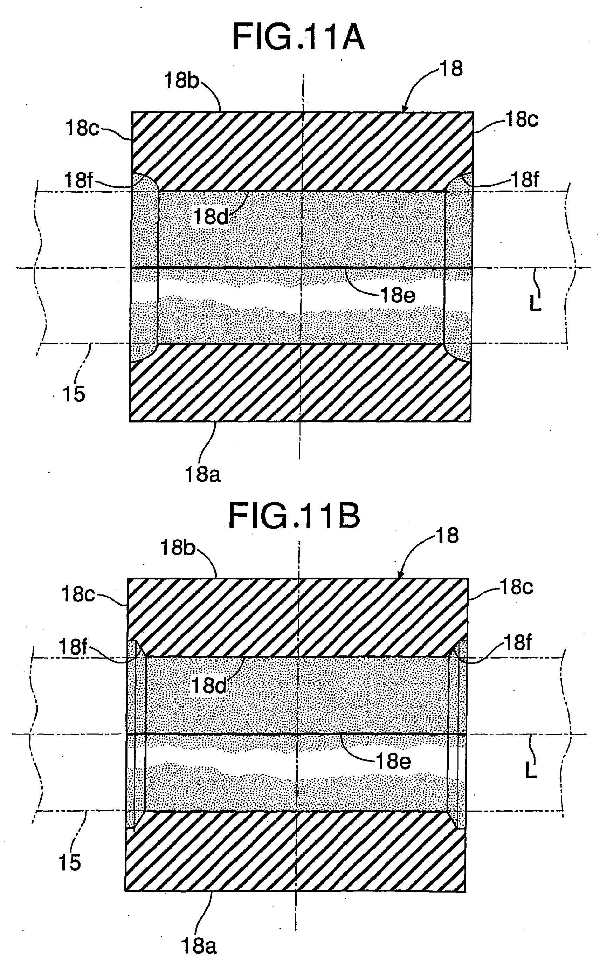

In the first to third embodiments, the stabilizer bush 18 has a linear chamfered portion 18f, but it is not always necessary for the chamfered portion 18f to be linear. In an example of FIG. 11A showing a sixth embodiment, a chamfered portion 18f is curved, and in an example of FIG. 11B showing a seventh embodiment, a chamfered portion 18f has a stepped linear shape. In these embodiments, in a state in which a stabilizer bush 18 is fitted, by setting an acute angle formed by the chamfered portion 18f relative to the axis L in a range of 45° to 75° it is possible to attain the same operational effects as those of the first to third embodiments.

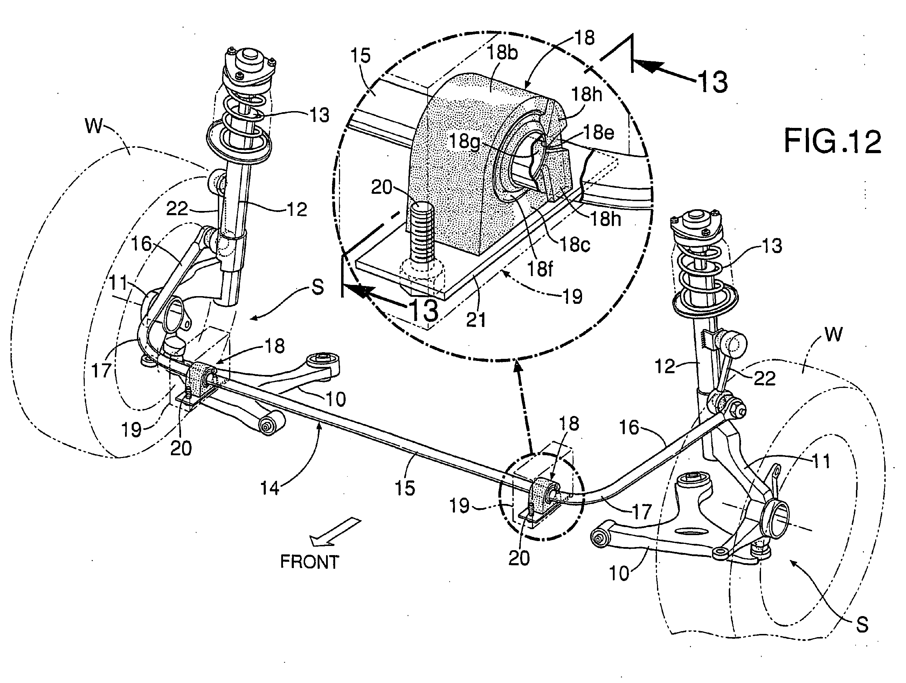

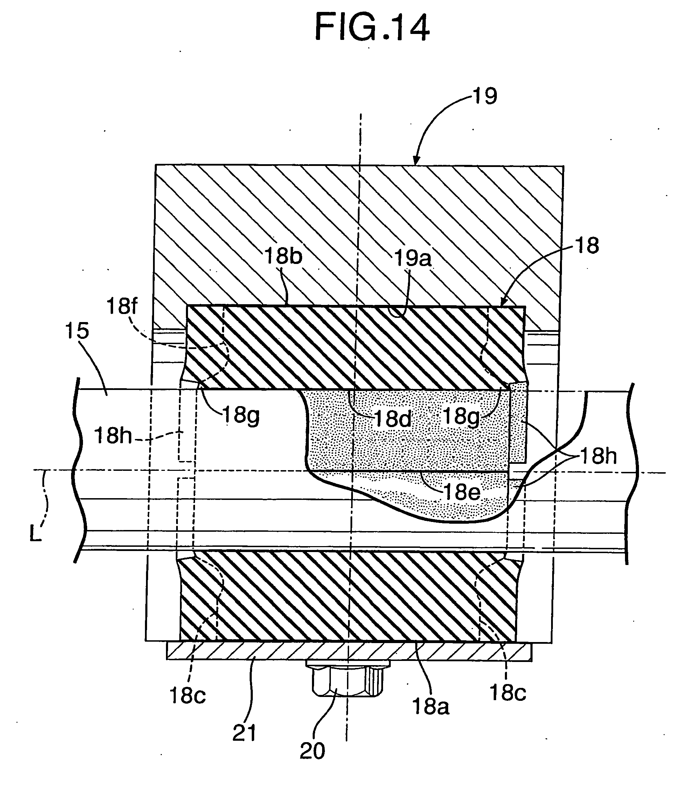

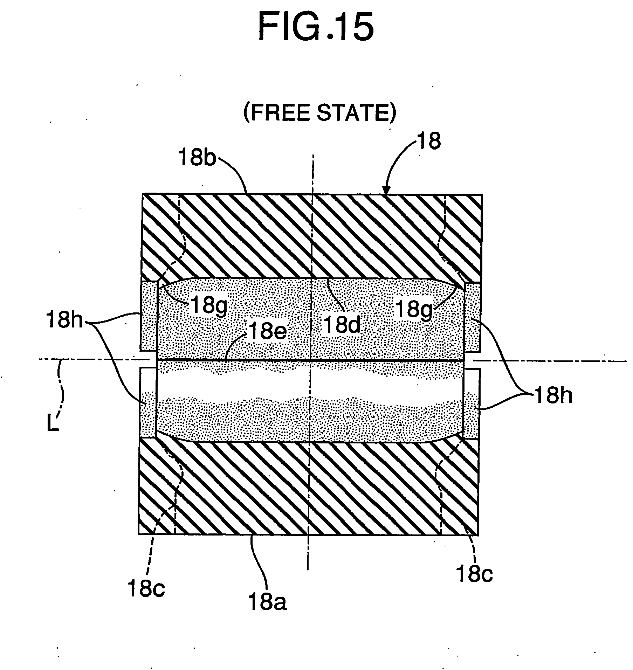

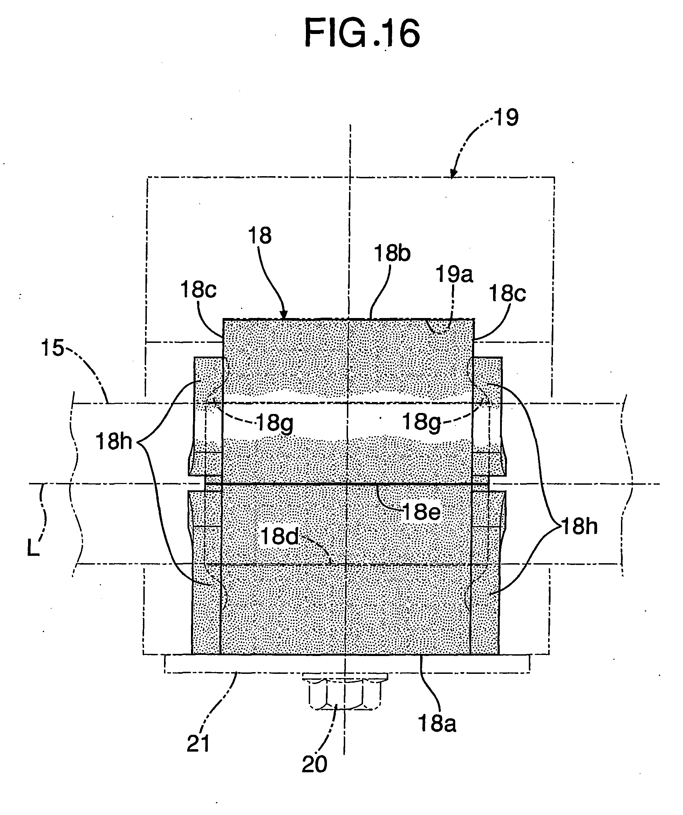

An eighth embodiment is now explained by reference to FIG. 12 to FIG. 16.

As shown in FIG. 12, strut type suspension systems S and S suspending left and right wheels W and W include left and right knuckles 11 and 11 vertically movably supported on a vehicle body via suspension arms 10 and 10, dampers 12 and 12 connected to upper parts of the knuckles 11 and 11 and extending upward, suspension springs 13 and 13 disposed coaxially on the outer periphery of upper parts of the dampers 12 and 12, and a stabilizer 14 providing a connection between the upper parts of the left and right knuckles 11 and 11.

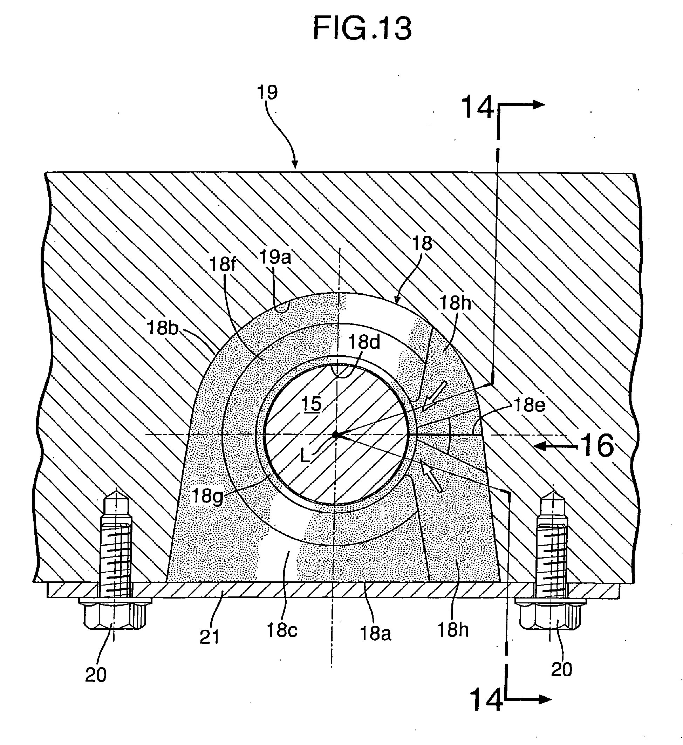

The stabilizer 14 includes a torsion portion 15 extending linearly in the vehicle width direction, left and right arm portions 16 and 16 extending linearly from opposite ends of the torsion portion 15 toward the rear of the vehicle body, and left and right curved portions 17 and 17 providing smooth connections between the torsion portion 15 and the arm portions 16 and 16. Extremities of the left and right arm portions 16 and 16 are connected to the dampers 12 and 12 via links 22 and 22. Tubular stabilizer bushes 18 and 18 made of rubber are fitted onto opposite ends of the torsion portion 15 adjacent to the left and right curved portions 17 and 17, and these stabilizer bushes 18 and 18 are supported by being clamped between a U-shaped mounting portion 19a (see FIG. 13) of a vehicle body 19 and a plate-shaped mounting bracket 21 fixed by bolts 20 and 20 to the vehicle body 19 so as to cover the mounting portion 19a.

As is clear from FIG. 12 to FIG. 16, each stabilizer bush 18 includes a flat first outer peripheral face 18a, a U-shaped second outer peripheral face 18b, a pair of side faces 18c and 18c, and a circular cross-section inner peripheral face 18d opening on the two side faces 18c and 18c and into which the torsion portion 15 of the stabilizer 14 is fitted. A split groove-shaped slit 18e is formed in the stabilizer bush 18, the slit 18e being disposed within a plane containing an axis L of the stabilizer bush 18 and extending from the second outer peripheral face 18b to the inner peripheral face 18d, and small-diameter portions 18g and 18g projecting radially inwardly are formed at the open end of the inner peripheral face 18d. Furthermore, a pair of thick portions 18h and 18h project in the axis L direction at positions, sandwiching the slit 18e, on each side face 18c. The thick portions 18h and 18h are slightly spaced from the slit 18e and extend radially with the axis L as the center.

The stabilizer bush 18 having the above-mentioned shape may be fitted onto the outer peripheral face of the torsion portion 15 of the stabilizer 14 by resiliently deforming the slit 18e so as to widen it. The U-shaped second outer peripheral face 18b of the stabilizer bush 18 is fitted into the U-shaped mounting portion 19a of the vehicle body 19, and the flat first outer peripheral face 18a is abutted against and retained by the flat mounting bracket 21.

With regard to the stabilizer 14 having the above arrangement, when the left and right wheels W and W move vertically with the same phase, since the left and right arm portions 16 and 16 move vertically with the same phase, the torsion portion 15 is not twisted, and a roll moment is not generated, but when the left and right wheels W and W move vertically with opposite phases, since the left and right arm portions 16 and 16 move vertically with opposite phases, the torsion portion 15 is twisted, and a roll moment for suppressing rolling of the vehicle body is thus generated, thereby enhancing the drivability of the vehicle.

When an external force acts in the radial direction on the torsion portion 15 of the stabilizer 14, the slit 18e of the stabilizer bush 18 opens and allows sand or mud to enter between the outer peripheral face of the torsion portion 15 and the inner peripheral face 18d of the stabilizer bush 18, thus generating abnormal noise or causing abrasion of the torsion portion 15, which is a problem. However, in accordance with the present embodiment, since the thick portions 18h and 18h are provided on the stabilizer bush 18, the rigidity of the stabilizer bush 18 against radial compression is higher for sections with the thick portions 18h and 18h than for a section without them. As a result, the slit 18e is pushed from opposite sides by the thick portions 18h and 18h having high rigidity and strongly compressed in a closing direction, and it becomes harder to open even when a radial external force acts on the torsion portion 15, thus reliably preventing sand or mud from entering between the outer peripheral face of the torsion portion 15 and the inner peripheral face 18d of the stabilizer bush 18 via the slit 18e.

Moreover, the small-diameter portions 18g and 18g, which are formed at the open end of the inner peripheral face 18d of the stabilizer bush 18, are strongly pressed against the outer peripheral face of the torsion portion 15, thus more reliably preventing sand or mud from entering through the open end and reaching the outer peripheral face of the torsion portion 15.

In this way, since it is possible to prevent a foreign body from entering between the outer peripheral face of the torsion portion 15 and the inner peripheral face 18d of the stabilizer bush 18, it is possible to prevent effectively abnormal noise from being generated when the torsion portion 15 is twisted or the torsion portion 15 from being abraded in a short period of time.

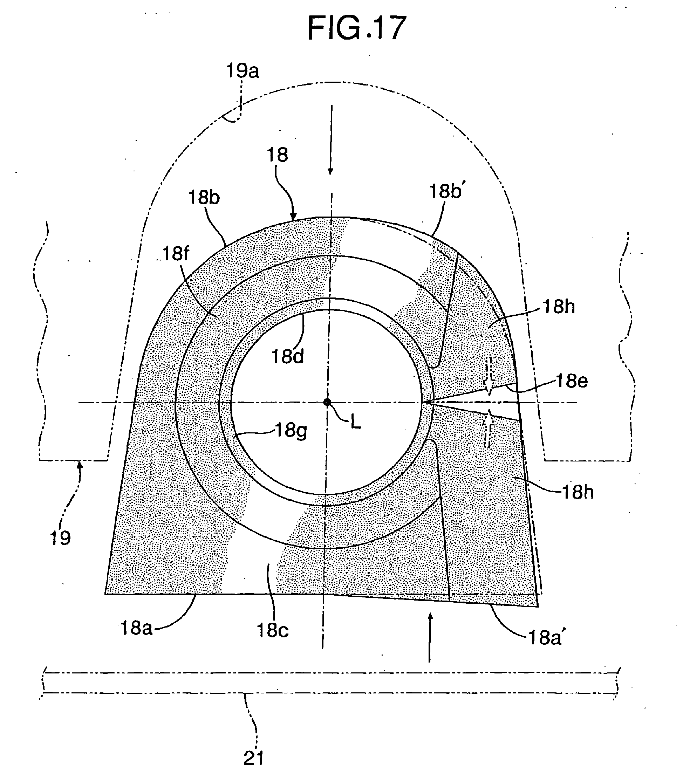

A ninth embodiment is now explained by reference to FIG. 17.

In the eighth embodiment described above, the slit 18e of the stabilizer bush 18 is closed in a free state, but a slit 18e of the ninth embodiment opens in a wedge shape from a second outer peripheral face 18b to an inner peripheral face 18d in a free state, and edges of two thick portions 18h and 18h formed on respective side faces 18c coincide with edges of the slit 18e. In the stabilizer bush 18, a first bulge portion 18a' projects radially outward from a first outer peripheral face 18a on the slit 18e side and a second bulge portion 18b' projects radially outward from the second outer peripheral face 18b on the slit 18e side.

As shown in FIG. 17, when the stabilizer bush 18 is held between a mounting portion 19a of a vehicle body 19 and a mounting bracket 21, the first and second bulge portions 18a' and 18b' are compressed so as to close up tight the slit 18e. In this arrangement, as in the above-mentioned eighth embodiment, the thick portions 18h and 18h function so as to firmly close the slit 18e, thereby reliably preventing sand or mud from entering.

The slit 18e of the stabilizer bush 18 of the eighth embodiment is formed by cutting with a cutter or a laser after molding the stabilizer bush 18, but in the stabilizer bush 18 of the ninth embodiment its slit 18e is formed by the combined use of die molding and cutting. This technique is the same as that explained for FIG. 7A and FIG. 7B above, and duplication of the explanation is omitted.

Embodiments of the present invention are explained above, but the present invention can be modified in a variety of ways as long as the modifications do not depart from the spirit and scope of the present invention.

For example, the stabilizer 14 of the embodiments integrally includes the torsion portion 15, the arm portions 16 and 16, and the curved portions 17 and 17, but arm portions 16 and 16 may be formed from a separate member and fixed to opposite ends of a linear torsion portion 15 via a bolt, etc.

Furthermore, in the embodiments, the strut type suspension S is illustrated, but the stabilizer 14 of the present invention may be applied to any type of suspension system.

In the embodiments, the stabilizer bush 18 is supported by being clamped between the U-shaped mounting portion 19a formed on the vehicle body 19 and the flat mounting bracket 21, but the stabilizer bush 18 may be supported on a flat face of the vehicle body 19 using a U-shaped mounting bracket.

Furthermore, in the embodiments, the arm portions 16 and 16 of the stabilizer 14 are connected to the dampers 12 and 12, but the arm portions 16 and 16 of the stabilizer 14 may be connected to the knuckles 11 and 11 or the suspension arms 10 and 10.

Moreover, in the embodiment, the thick portions 18h and 18h are formed by making portions, on opposite sides of the slit 18e, of the side face 18c of the stabilizer bush 18 project in the axis L direction, but it is not always necessary for the thick portions 18h and 18h to project from the side face 18c in the axis L direction as long as the thick portions 18h and 18h are thicker in the axis L direction than the other portions of the side face 18c.

## Claims

1. A stabilizer support structure in which an inner peripheral face (18d) of a tubular stabilizer bush (18) is fitted onto an outer peripheral face of a torsion portion (15) of a stabilizer (14) providing a connection between left and right suspension systems (S), and an outer peripheral face (18a, 18b) of the stabilizer bush (18) is clamped under pressure and fixed between a mounting portion (19a) of a vehicle body (19) and a fixing member (21) fixed to the vehicle body (19),
**characterized in that** the stabilizer bush (18) comprises a slit (18e) cut from the outer peripheral face (18b) to the inner peripheral face (18d) along an axis (L) of the stabilizer bush (18),
a chamfered portion (18f) opening out radially outwardly is formed on at least one open end of the inner peripheral face (18d) of the stabilizer bush (18) only in opposite side portions sandwiching the slit (18e).

2. The stabilizer support structure according to claim 1, wherein the stabilizer (14) comprises arm portions (16) extending linearly in the longitudinal direction of the vehicle body from opposite ends of the torsion portion (15) extending linearly in the vehicle width direction,
wherein the arm portion (16) is formed from a member separate from the torsion portion (15), and end parts on the front side in the longitudinal direction of the vehicle body are mounted on opposite ends of the torsion portion (15).

3. The stabilizer support structure according to claim 1, wherein in a cross section of the stabilizer bush (18) perpendicular to an axis (L) thereof, the chamfered portion (18f) is formed in a linear shape.

4. The stabilizer support structure according to claim 1, wherein in a cross section of the stabilizer bush (18) perpendicular to an axis (L) thereof, the chamfered portion (18f) is formed in a curved shape.

5. The stabilizer support structure according to claim 1, wherein the chamfered portion (18f) has a dimension, as measured in the circumferential direction, smaller than a diameter of the inner peripheral face (18d).

6. The stabilizer support structure according to claim 1, wherein the depth of the chamfered portion (18f) is the deepest at a position where the slit (18e) intersects the inner peripheral face (18d) of the stabilizer bush (18), and gradually becomes shallower in going radially outward therefrom and also toward opposite sides in the circumferential direction.

## Patentansprüche

1. Stabilisatorlagerstruktur, worin eine Innenumfangsfläche (18d) einer rohrförmigen Stabilisatorbuchse (18) auf einer Außenumfangsfläche eines Torsionsabschnitts (15) eines Stabilisators (14) sitzt, der eine Verbindung zwischen linken und rechten Aufhängungssystemen (S) herstellt, und eine Außenumfangsfläche (18a, 18b) der Stabilisatorbuchse (18) zwischen einem Halterungsabschnitt (19a) eines Fahrzeugkörpers (19) und einem am Fahrzeugkörper (19) befestigten Befestigungselement (21) unter Druck eingeklemmt und befestigt ist,
**dadurch gekennzeichnet, dass** die Stabilisatorbuchse (18) einen Schlitz (18e) aufweist, der von der Außenumfangsfläche (18b) zur Innenumfangsfläche (18d) entlang einer Achse (L) der Stabilisatorbuchse (18) geschnitten ist,
wobei ein abgeschrägter Abschnitt (18f), der sich nach radial auswärts öffnet, an zumindest einem offenen Ende der Innenumfangsfläche (18d) der Stabilisatorbuchse (18) nur in gegenüberliegenden Seitenabschnitten, welche den Schlitz (18e) zwischen sich aufnehmen, ausgebildet ist.

2. Die Stabilisatorlagerstruktur nach Anspruch 1, worin der Stabilisator (14) Armabschnitte (16) aufweist, die sich linear in der Längsrichtung des Fahrzeugkörpers von entgegengesetzten Enden des Torsionsabschnitts (15) erstrecken, der sich linear in der Fahrzeugbreitenrichtung erstreckt,
worin der Armabschnitt (16) aus einem vom Torsionsabschnitt (15) separaten Element gebildet ist, und Endteile an der Vorderseite in Längsrichtung des Fahrzeugkörpers an entgegengesetzten Enden des Torsionsabschnitts (15) angebracht sind.

3. Die Stabilisatorlagerstruktur nach Anspruch 1, worin, im Querschnitt der Stabilisatorbuchse (18) senkrecht zu dessen Achse (L), der abgeschrägte Abschnitt (18f) in linearer Form ausgebildet ist.

4. Die Stabilisatorlagerstruktur nach Anspruch 1, worin, im Querschnitt der Stabilisatorbuchse (18) senkrecht zu dessen Achse (L), der abgeschrägte Abschnitt (18f) in gekrümmter Form ausgebildet ist.

5. Die Stabilisatorlagerstruktur nach Anspruch 1, worin der abgeschrägte Abschnitt (18f), gemessen in der Umfangsrichtung, eine Dimension hat, die kleiner ist als ein Durchmesser der Innenumfangsfläche (18d).

6. Die Stabilisatorlagerstruktur nach Anspruch 1, worin die Tiefe des abgeschrägten Abschnitts (18f) an einer Position am tiefsten ist, wo der Schlitz (18e) die Innenumfangsfläche (18d) der Stabilisatorbuchse (18) schneidet, und, davon radial auswärts gehend und auch zu entgegengesetzten Seiten in der Umfangsrichtung, allmählich flacher wird.

## Revendications

1. Structure de support de stabilisateur, dans laquelle une face périphérique intérieure (18d) d'une douille de stabilisateur tubulaire (18) est agencée sur une face périphérique extérieure d'une partie de torsion (15) d'un stabilisateur (14), établissant une connexion entre des systèmes de suspension gauche et droit (S), et une face périphérique extérieure (18a, 18b) de la douille de stabilisateur (18) est serrée sous pression et fixée entre une partie de montage (19a) d'une carrosserie de véhicule (19) et un élément de fixation (21) qui est fixé à la carrosserie de véhicule (19),
**caractérisée en ce que** la douille de stabilisateur (18) comporte une fente (18e) découpée à partir de la face périphérique extérieure (18b) jusqu'à la face périphérique intérieure (18d) le long d'un axe (L) de la douille de stabilisateur (18),
une partie chanfreinée (18f) s'ouvrant radialement vers l'extérieur est formée sur au moins une extrémité ouverte de la face périphérique intérieure (18d) de la douille de stabilisateur (18) uniquement dans des parties latérales opposées coinçant la fente (18e).

2. Structure de support de stabilisateur selon la revendication 1, dans laquelle le stabilisateur (14) comprend des parties de bras (16) qui s'étendent de façon linéaire dans la direction longitudinale de la carrosserie de véhicule à partir d'extrémités opposées de la partie de torsion (15) qui s'étend de façon linéaire dans le sens de la largeur du véhicule, dans laquelle la partie de bras (16) est formée à partir d'un élément séparé de la partie de torsion (15), et des parties d'extrémité sur le côté avant dans la direction longitudinale de la carrosserie de véhicule sont montées sur des extrémités opposées de la partie de torsion (15).

3. Structure de support de stabilisateur selon la revendication 1, dans laquelle, dans une section transversale de la douille de stabilisateur (18) perpendiculaire à un axe (L) de celle-ci, la partie chanfreinée (18f) est formée avec une forme linéaire.

4. Structure de support de stabilisateur selon la revendication 1, dans laquelle dans une section transversale de la douille de stabilisateur (18) perpendiculaire à un axe (L) de celle-ci, la partie chanfreinée (18f) est formée avec une forme courbe.

5. Structure de support de stabilisateur selon la revendication 1, dans laquelle la partie chanfreinée (18f) présente une dimension, mesurée dans la direction circonférentielle, qui est plus petite qu'un diamètre de la face périphérique intérieure (18d).

6. Structure de support de stabilisateur selon la revendication 1, dans laquelle la profondeur de la partie chanfreinée (18f) est la plus profonde à une position à laquelle la fente (18e) coupe la face périphérique intérieure (18d) de la douille de stabilisateur (18), et devient graduellement moins profonde en s'étendant radialement vers l'extérieur à partir de celle-ci et également en direction de côtés opposés dans la direction circonférentielle.
